# FASCICULE DE BREVET EUROPEEN

(11) **EP 1 566 131 B1**
(45) Date de publication et mention de la délivrance du brevet: **29.11.2006**
(21) Numéro de dépôt: 05356027.2
(22) Date de dépôt: 08.02.2005
(51) Int. Cl.: A47J 43/07

(54) **Appareil electromenager de préparation culinaire comportant un socle avec plusieurs positions de reception**
Elektrisches Haushaltsgerät zur Nahrungszubereitung mit einem Sockel mit verschiedenen Aufnahmepositionen
Electric household appliance for food processing comprising a base with several receiving positions

(30) Priorité: 23.02.2004 FR 0401784
(43) Date de publication de la demande: 24.08.2005
(73) Titulaire: SEB S.A., 69130 Ecully Cedex (FR)
(72) Inventeur: Ravard, Franck, 53100 Mayenne (FR); Grassin, Stéphane, 72130 Fresnay s/Sarthe (FR)
(74) Mandataire: Kiehl, Hubert

(56) Documents cités:
- FR-A- 2 724 104
- GB-A- 2 387 558
- US-A- 4 335 860
- US-B1- 6 186 425

## Description

La présente invention concerne le domaine technique des appareils électroménagers de préparation culinaire comportant un récipient de travail disposé sur un boîtier moteur formant un socle et fermé par un couvercle.

La présente invention concerne plus particulièrement les appareils du type précité comportant un dispositif de sécurité interdisant le fonctionnement du moteur de l'appareil lorsque le récipient de travail est en place sur le boîtier moteur et que le couvercle n'est pas verrouillé sur le récipient de travail.

Dans les appareils connus de ce genre, le dispositif de sécurité comporte généralement une tige de sécurité agencée dans la paroi du récipient de travail. Cette tige de sécurité coopère avec un interrupteur agencé dans le boîtier moteur.

Un appareil similaire est décrit dans le document FR 2 724 104 A1.

Toutefois, le récipient de travail doit être mis en place sur le boîtier moteur selon une position déterminée pour que le dispositif de sécurité puisse actionner l'interrupteur. Une telle disposition peut s'avérer gênante pour certains utilisateurs, notamment pour les utilisateurs gauchers.

L'objet de la présente invention est d'améliorer l'ergonomie des appareils du type précité, tout en conservant un dispositif de sécurité interdisant le fonctionnement du moteur de l'appareil lorsque le récipient de travail est en place sur le boîtier moteur et que le couvercle n'est pas verrouillé sur le récipient de travail.

Cet objet est atteint avec un appareil électroménager de préparation culinaire, comprenant un boîtier moteur, un récipient de travail prévu pour être disposé sur le boîtier moteur, un couvercle prévu pour fermer le récipient de travail, le couvercle comportant un organe de détection prévu pour coopérer avec un élément de transmission agencé dans le récipient de travail lorsque le couvercle est verrouillé sur le récipient de travail, l'élément de transmission coopérant avec un élément de commande agencé dans le boîtier moteur pour autoriser le fonctionnement de l'appareil lorsque le couvercle ferme le récipient de travail disposé sur le boîtier moteur, du fait que le récipient de travail peut être mis en place sur le boîtier moteur selon plusieurs positions angulaires et en ce que l'élément de commande est monté mobile en rotation contre un moyen de rappel et comporte plusieurs cames de détection prévues pour coopérer avec l'élément de transmission. Ainsi le récipient de travail peut être disposé sur le boîtier moteur selon différentes orientations, tout en conservant la possibilité d'utiliser un dispositif de sécurité détectant la présence du couvercle pour autoriser le fonctionnement de l'appareil. L'élément de commande peut être monté dans le boîtier moteur autour de l'axe de la motorisation.

Avantageusement alors l'élément de commande forme une couronne. Cette disposition permet d'agencer l'élément de commande autour de la motorisation, ce qui contribue à limiter l'encombrement du dispositif de sécurité.

Avantageusement l'élément de commande est monté suspendu à un corps du boîtier moteur formant un socle de réception du récipient de travail. Le corps forme ainsi une demi-coque supérieure du boîtier moteur, rendant la construction particulièrement simple.

Selon une forme de réalisation avantageuse, l'élément de commande comporte des protubérances latérales engagées dans des ouvertures latérales du boîtier moteur. Les protubérances latérales permettent ainsi de supporter l'élément de commande. En alternative, l'élément de commande pourrait prendre appui sur des nervures du boîtier moteur.

Avantageusement, selon la disposition précédente, l'une au moins des protubérances latérales porte l'une des cames de détection prévues pour coopérer avec l'élément de transmission. En alternative, la ou lesdites cames de détection ne sont pas nécessairement agencées sur les protubérances latérales. En d'autres termes, le dispositif de commande peut être dissocié des moyens de support.

Avantageusement alors, les ouvertures latérales sont ménagées dans des conformations prévues pour le blocage en rotation du récipient de travail. Les conformations sont agencées de manière périodique pour autoriser plusieurs positions pour le récipient de travail. L'appareil peut toutefois comporter des conformations de blocage dépourvues d'ouvertures latérales.

Selon une disposition avantageuse, les conformations sont concaves. Cette disposition facilite l'implantation de l'élément de commande.

Avantageusement le nombre de positions angulaires dans lesquelles le récipient de travail peut être mis en place sur le boîtier moteur est compris entre deux et six. Ces dispositions permettent une utilisation de l'appareil par les droitiers comme par les gauchers tout en conservant une réalisation simple pour le dispositif de sécurité.

L'invention sera mieux comprise à l'étude d'un exemple de réalisation, pris à titre nullement limitatif, accompagné de variantes, illustré dans les figures annexées, dans lesquelles :
- la figure 1 est une vue en éclaté d'un appareil électroménager de préparation culinaire selon l'invention,
- la figure 2 est une vue en perspective de deux éléments du dispositif de sécurité,
- la figure 3 est une vue de dessous en perspective des éléments illustrés à la figure 2 montés dans la partie supérieure du boîtier moteur de l'appareil,
- la figure 4 est une vue de dessous en perspective des éléments illustrés à la figure 2 coopérant avec la partie inférieure du récipient de travail de l'appareil.

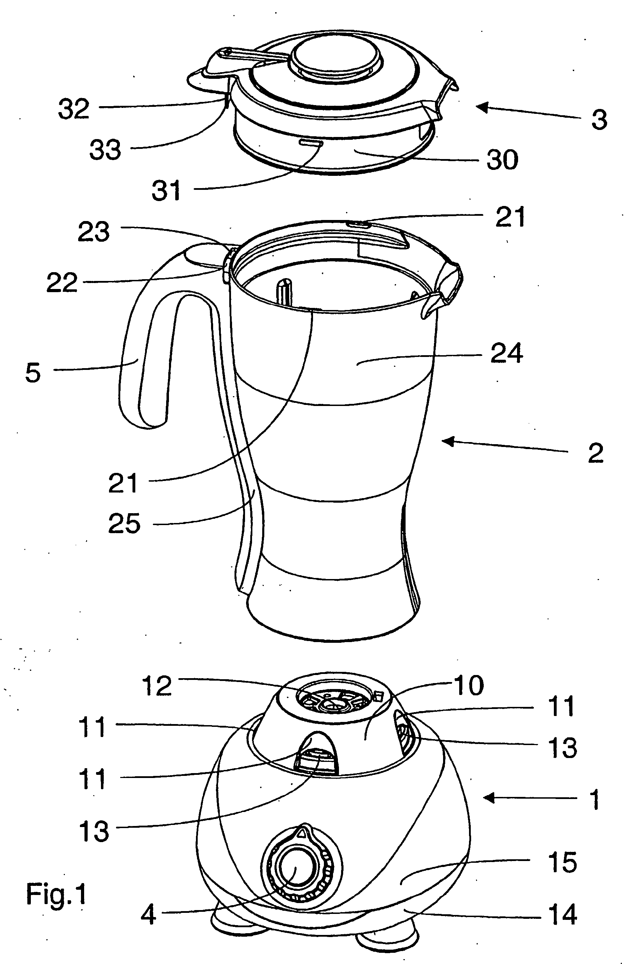

La figure 1 montre un appareil électroménager de préparation culinaire selon l'invention comportant un boîtier moteur 1, un récipient de travail 2 prévu pour être mis en place sur le boîtier moteur 1 selon plusieurs positions angulaires, et un couvercle 3 prévu pour fermer le récipient de travail 2. Le boîtier moteur 1 comporte un bouton de commande 4. Le récipient de travail 2 comporte une poignée 5.

Le boîtier moteur 1 forme un socle 10 de réception du récipient de travail 2. Le socle 10 présente une série de conformations 11 agencées de manière périodique. Les conformations 11 sont prévues pour le blocage en rotation du récipient de travail 2.

Plus particulièrement, les conformations 11 sont au nombre de quatre, et permettent d'offrir au récipient de travail 2 quatre positions différentes sur le socle 10. Notamment, le récipient de travail 2 peut être disposé sur le boîtier moteur 1 avec la poignée 5 à gauche du bouton de commande 4, tel que proposé sur la figure 1, ou à droite, les deux autres positions étant également possibles. A titre de variante, le boîtier moteur 1 comporte au moins deux conformations 11.

Le boîtier moteur 1 comporte un moteur prévu pour entraîner un outil de travail disposé dans le récipient de travail 2. A cet effet le socle 10 présente une ouverture axiale 12 prévue pour le passage d'un axe entraîneur (non illustré aux figures).

Le couvercle 3 peut être verrouillé sur le récipient de travail 2 par un système de baïonnette. A cet effet le couvercle 3 présente une jupe 30 comportant des ergots 31 prévus pour coopérer avec des ergots 21 agencés sur la paroi interne du bord supérieur du récipient de travail 2. Le verrouillage du couvercle 3 s'effectue par rotation.

Le couvercle 3 comporte un organe de détection 32 appartenant à un dispositif de sécurité interdisant le fonctionnement du moteur de l'appareil lorsque le récipient de travail 2 est en place sur le boîtier moteur 1 et que le couvercle 3 n'est pas verrouillé sur le récipient de travail 2.

L'organe de détection 32 est prévu pour coopérer avec un élément de transmission 22 agencé dans le récipient de travail 2. A cet effet l'organe de détection 32 présente une came de commande 33 prévue pour coopérer avec la partie supérieure de l'élément de transmission 22 agencée en regard d'une découpe 23 ménagée dans une paroi du récipient de travail 2. Plus particulièrement l'élément de transmission 22 est monté entre un réceptacle 24 et une paroi rapportée 25. La poignée 5 est issue de la paroi rapportée 25.

Les conformations 11 du socle 10 sont concaves et présentent chacune une ouverture supérieure 13 prévue pour le passage de la partie inférieure de l'élément de transmission 22. Le boîtier moteur 1 comporte une base 14 surmontée d'un corps 15. Le socle 10 est ménagé sur le corps 15.

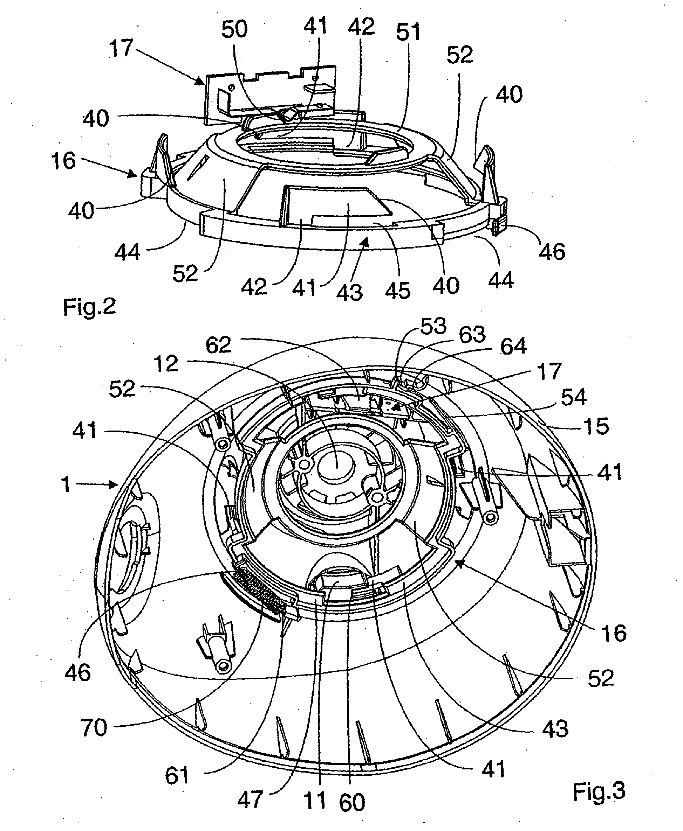

Le dispositif de sécurité comporte également un élément de commande 16 et un interrupteur de sécurité 17, illustrés à la figure 2. L'élément de commande 16 et l'interrupteur de sécurité 17 sont agencés dans le boîtier moteur 1. La figure 3 illustre l'élément de commande 16 et l'interrupteur de sécurité 17 montés dans le corps 15 du boîtier moteur 1.

L'élément de commande 16 forme une couronne 43. L'élément de commande 16 comporte plusieurs cames de détection 40 prévues pour coopérer avec l'élément de transmission 22. Chaque came de détection 40 est ménagée à une extrémité d'une protubérance latérale 41 reliée par un montant 42 à la couronne 43. Les protubérances latérales 41 sont agencés sur un diamètre et présentent une épaisseur de paroi sensiblement constante. Ainsi, les protubérances latérales 41 sont incurvées, tel que visible sur la figure 2. La couronne 43 présente des renfoncements internes 44 et des renfoncements externes 45 sous les protubérances latérales 41 pour faciliter la réalisation de l'élément de commande 16 en une seule pièce moulée. La couronne 43 présente un tenon 46 prévu pour recevoir un moyen de rappel, visible sur la figure 3.

L'élément de commande 16 porte une came d'actionnement 50 prévue pour actionner l'interrupteur 17. La came d'actionnement 50 est issue d'une couronne supérieure 51 reliée à la couronne 43 par deux parois 52. La couronne supérieure 51 permet le passage de l'axe du moteur (non représenté aux figures).

Le corps 15 présente des ouvertures latérales 60 prévues pour l'introduction des extrémités des protubérances latérales 41 portant les cames de détection 40. Les ouvertures latérales 60 sont ménagées dans les conformations 11 prévues pour le blocage en rotation du récipient de travail 2. L'élément de commande 16 comporte des portions de paroi radiale interne 47 agencées à l'intérieur de la couronne 43. Les portions de paroi radiale interne 47 permettent de rigidifier la couronne 43. Les portions de paroi radiale interne 47 s'interrompent sous les protubérances latérales 41.

Ainsi lorsque les protubérances latérales 41 sont engagées dans les ouvertures latérales 60 du corps 15, l'élément de commande 16 est suspendu dans le corps 15 par les protubérances latérales 41.

Un moyen de rappel 70 est monté entre le corps 15 et l'élément de commande 16. L'élément de commande 16 est monté mobile en rotation contre le moyen de rappel 70. La raideur du moyen de rappel 70 et la pente des cames de détection 40 sont choisies de manière à ce que le poids du récipient de travail 2 et du couvercle 3 soit suffisant pour repousser le moyen de rappel 70 en laissant le récipient de travail 2 en appui sur le socle 10. Plus particulièrement, le moyen de rappel 70 est formé par un ressort hélicoïdal monté entre un tenon 61 du corps 15 et le tenon 46 de l'élément de commande 16.

Le corps 15 comporte un crochet 62 formant un moyen de retenue de l'interrupteur 17.

L'élément de commande 16 porte un ergot 53 prévu pour coopérer avec une butée 63 du corps 15 et une languette élastique 54 prévue pour coopérer avec une autre butée 64 du corps 15. Les butées 63 et 64 limitent la course angulaire de l'élément de commande 16. L'ergot 53 s'étend radialement vers l'extérieur à partir de la couronne 43. La languette élastique 54 s'étend sensiblement transversalement par rapport à la couronne 43.

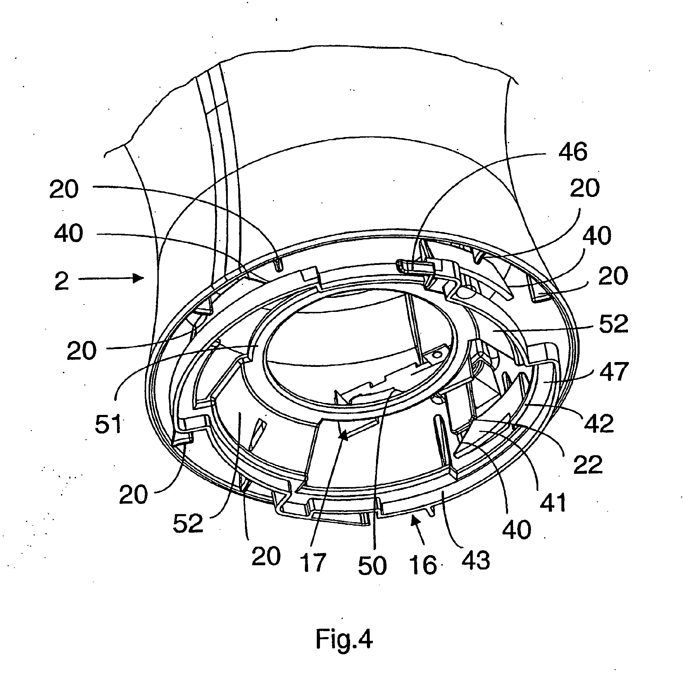

La figure 4 représente l'une des cames de détection 40 actionnée par la partie inférieure de l'élément de transmission 22 lorsque le récipient de travail 2 est disposé sur le socle 10 (non représenté sur la figure). L'élément de transmission 22 est par exemple formé par une tige montée contre un ressort de rappel, cette tige étant mobile par rapport au récipient de travail selon une direction sensiblement verticale. L'élément de commande 16 est mobile contre le moyen de rappel 70 selon une direction formant un angle avec la direction de déplacement de l'extrémité inférieure de l'élément de transmission 22.

Le récipient de travail 2 comporte des conformations 20 prévues pour coopérer avec les conformations 11 du socle 10 afin d'immobiliser en rotation le récipient de travail 2 par rapport au socle 10. Le récipient de travail 2 comporte également un outil de travail prévu pour être entraîné par le moteur, non illustré aux figures.

Le montage de l'élément de commande 16 s'effectue en positionnant les protubérances latérales 41 au niveau des ouvertures latérales 60. La languette élastique 54 est alors disposée derrière la butée 63. La couronne 43 est ensuite tournée pour introduire les protubérances latérales 41 dans les ouvertures latérales 60. L'extrémité libre de la languette élastique 54 passe derrière les butées 63 et 64 lors de la rotation de la couronne 43. L'ergot 53 vient alors au contact de la butée 63. Les protubérances latérales 41 sont engagées dans les ouvertures latérales 60. Une rotation de la couronne 43 dans l'autre sens amène l'extrémité de la languette élastique 54 au contact de la butée 64. La course de l'élément de commande 16 est ainsi limitée. Le ressort de rappel 70 monté entre les tenons 46 et 61 amène l'ergot 53 au contact de la butée 63, tel que représenté à la figure 4.

Ainsi l'élément de commande 16 est monté suspendu par rapport au boîtier moteur 1. Le montage est particulièrement simple car il suffit d'insérer l'élément de commande 16 dans le boîtier moteur 1 et de mettre en place le moyen de rappel 70. L'élément de commande 16 est verrouillé en place grâce à la languette élastique 54.

L'élément de commande 16 est monté suspendu au corps 15 par les protubérances latérales 41 engagées dans les ouvertures latérales 60. Seuls les bords inférieurs des protubérances latérales 41 reposent sur le corps 15. L'effort de friction entre l'élément de commande 16 et le corps 15 est donc particulièrement faible. De plus, l'agencement des cames de commande 40 sur les protubérances latérales 41 facilite la transmission du mouvement de l'élément de transmission 22 à l'élément de commande 16.

La présente invention fonctionne de la manière suivante.

L'utilisateur pose le récipient de travail 2 sur le socle 10 dans l'une des quatre positions possibles. Les conformations 20 du récipient de travail 2 s'engagent dans les conformations 11 du socle 10. L'extrémité inférieure de l'élément de transmission 22 est alors en regard de l'une des ouvertures supérieures 13. Toutefois tant que le couvercle 3 n'est pas verrouillé sur le récipient de travail 2 disposé sur le boîtier moteur 1, l'élément de transmission 22 ne peut actionner l'élément de commande 16. Lorsque le couvercle 3 est verrouillé sur le récipient de travail 2, la came de commande 33 repousse l'élément de transmission 22 vers le bas. L'extrémité inférieure de l'élément de transmission 22 engagée dans l'une des ouvertures supérieures 13 repousse alors l'une des cames de détection 40 vers l'ouverture latérale 60, entraînant en rotation l'élément de commande 16. La came d'actionnement 50 coopère alors avec l'interrupteur 17 pour autoriser le fonctionnement de l'appareil.

Lorsque l'utilisateur retire le récipient de travail 2 du socle 10 ou déverrouille le couvercle 3, l'élément de transmission 22 libère la came de détection 40, provoquant la rotation de l'élément de commande 16 sous l'action du moyen de rappel 70. La came d'actionnement 50 s'éloigne de l'interrupteur 17, entraînant l'interruption de l'alimentation du moteur de l'appareil.

Grâce aux quatre positions possibles du récipient de travail 2 sur le boîtier moteur 1, l'utilisateur doit tourner le récipient de travail 2 de 45° au plus pour pouvoir mettre en place ledit récipient de travail sur le boîtier 1. Une telle disposition est déjà connue dans des appareils dépourvus de dispositif de sécurité détectant la présence du couvercle. La présente invention permet d'offrir cet avantage avec un appareil pourvu d'un dispositif de sécurité détectant la présence du couvercle.

A titre de variante, le boîtier moteur 1 et le réceptacle de travail 2 ne comportent pas nécessairement quatre positions différentes de mise en place. De manière préférée le nombre de positions angulaires dans lesquelles le récipient de travail 2 peut être mis en place sur le boîtier moteur 1 est compris entre deux et six.

A titre de variante, le réceptacle de travail 2 et le couvercle 3 peuvent être remplacé par tout type d'accessoire comportant un corps fermé par un couvercle.

A titre de variante, les conformations 11 ne sont pas nécessairement concaves.

A titre de variante, les ouvertures supérieures 13 ne sont pas nécessairement ménagées dans les conformations 11.

A titre de variante, l'élément de transmission 22 peut être réalisé en plusieurs pièces. L'extrémité inférieure de l'élément de transmission 22 coopérant avec l'élément de commande 16 n'est pas nécessairement mobile selon une direction strictement verticale.

A titre de variante, les cames de détection 40 ne sont pas nécessairement agencées sur les protubérances latérales 41.

La présente invention n'est nullement limitée à l'exemple de réalisation décrit et à ses variantes, mais englobe de nombreuses modifications dans le cadre des revendications.

## Revendications

1. Appareil électroménager de préparation culinaire, comprenant un boîtier moteur (1), un récipient de travail (2) prévu pour être disposé sur le boîtier moteur (1), un couvercle (3) prévu pour fermer le récipient de travail (2), le couvercle (3) comportant un organe de détection (32) prévu pour coopérer avec un élément de transmission (22) agencé dans le récipient de travail (2) lorsque le couvercle (3) est verrouillé sur le récipient de travail (2), l'élément de transmission (22) coopérant avec un élément de commande (16) agencé dans le boîtier moteur (1) pour autoriser le fonctionnement de l'appareil lorsque le couvercle (3) ferme le récipient de travail (2) disposé sur le boîtier moteur (1), **caractérisé en ce que** le récipient de travail (2) peut être mis en place sur le boîtier moteur (1) selon plusieurs positions angulaires et **en ce que** l'élément de commande (16) est monté mobile en rotation contre un moyen de rappel (70) et comporte plusieurs cames de détection (40) prévues pour coopérer avec l'élément de transmission (22).

2. Appareil électroménager de préparation culinaire selon la revendication 1, **caractérisé en ce que** l'élément de commande (16) forme une couronne (43).

3. Appareil électroménager de préparation culinaire selon l'une des revendications 1 ou 2, **caractérisé en ce que** l'élément de commande (16) est monté suspendu à un corps (15) du boîtier moteur (1) formant un socle (10) de réception du récipient de travail (2).

4. Appareil électroménager de préparation culinaire selon l'une des revendications 1 à 3, **caractérisé en ce que** l'élément de commande (16) comporte des protubérances latérales (41) engagées dans des ouvertures latérales (60) du boîtier moteur (1).

5. Appareil électroménager de préparation culinaire selon la revendication 4, **caractérisé en ce que** l'une au moins des protubérances latérales (41) porte l'une des cames de détection (40) prévues pour coopérer avec l'élément de transmission (22).

6. Appareil électroménager de préparation culinaire selon l'une des revendications 4 ou 5, **caractérisé en ce que en ce que** les ouvertures latérales (60) sont ménagées dans des conformations (11) prévues pour le blocage en rotation du récipient de travail (2).

7. Appareil électroménager de préparation culinaire selon la revendication 6, **caractérisé en ce que** les conformations (11) sont concaves.

8. Appareil électroménager de préparation culinaire selon l'une des revendications 1 à 7, **caractérisé en ce que** le nombre de positions angulaires dans lesquelles le récipient de travail (2) peut être mis en place sur le boîtier moteur (1) est compris entre deux et six.

## Claims

1. A food-preparing household electrical appliance comprising a motor housing (1), a work receptacle (2) designed to be disposed on the motor housing (1), and a lid (3) designed to close the work receptacle (2), the lid (3) being provided with a detection member (32) designed to co-operate with a transmission element (22) arranged in the work receptacle (2) when the lid (3) is locked on the work receptacle (2), the transmission element (22) cooperating with a control element (16) arranged in the motor housing (1) so as to enable the appliance to operate when the lid (3) closes the work receptacle (2) as disposed on the motor housing (1), said food-preparing household electrical appliance being **characterized in that** the work receptacle (2) can be put in place on the motor housing (1) in a plurality of angular positions, and **in that** the control element (16) is mounted to move in rotation against return means (70) and is provided with a plurality of detection cams (40) designed to co-operate with the transmission element (22).

2. A food-preparing household electrical appliance according to claim 1, **characterized in that** the control element (16) forms a ring (43).

3. A food-preparing household electrical appliance according to claim 1 or claim 2, **characterized in that** the control element (16) is mounted such that it is suspended from a body (15) of the motor housing (1) forming a stand (10) for receiving the work receptacle (2).

4. A food-preparing household electrical appliance according to any one of claims 1 to 3, **characterized in that** the control element (16) is provided with side protuberances (41) engaged in side openings (60) in the motor housing (1).

5. A food-preparing household electrical appliance according to claim 4, **characterized in that** at least one of the side protuberances (41) carries one of the detection cams (40) designed to co-operate with the transmission element (22).

6. A food-preparing household electrical appliance according to claim 4 or claim 5, **characterized in that** the side openings (60) are provided in shapes (11) designed to lock the work receptacle (2) in rotation.

7. A food-preparing household electrical appliance according to claim 6, **characterized in that** the shapes (11) are concave.

8. A food-preparing household electrical appliance according to any one of claims 1 to 7, **characterized in that** the number of angular positions in which the work receptacle (2) can be put in place on the motor housing (1) lies in the range two to six.

## Patentansprüche

1. Haushaltsgerät zur Nahrungszubereitung, mit einem Motorgehäuse (1), einem zur Anordnung auf dem Motorgehäuse (1) vorgesehenen Arbeitsbehälter (2), einem zum Schließen des Arbeitsbehälters (2) vorgesehenen Deckel (3), wobei der Deckel (3) ein Erfassungselement (32) aufweist, der zum Zusammenzuwirken mit einem im Arbeitsbehälter (2) angeordneten Übertragungselement (22) vorgesehen ist, wenn der Deckel (3) auf dem Arbeitsbehälter (2) verriegelt ist, wobei das Übertragungselement (22) mit einem Steuerelement (16) zusammenwirkt, das im Motorgehäuse (1) angeordnet ist, um den Betrieb des Geräts zu erlauben, wenn der Deckel (3) den auf dem Motorgehäuse angeordneten Arbeitsbehälter (2) verschließt, **dadurch gekennzeichnet, dass** der Arbeitsbehälter (2) in mehreren Winkelpositionen auf das Motorgehäuse aufgesetzt werden kann und dass das Steuerelement (16) drehbeweglich gegen ein Rückstellmittel (70) angebracht ist und mehrere Erfassungsnocken (40) aufweist, die zum Zusammenwirken mit dem Übertragungselement (22) vorgesehen sind.

2. Haushaltsgerät zur Nahrungszubereitung nach Anspruch 1, **dadurch gekennzeichnet, dass** das Steuerelement (16) einen Kranz (43) bildet.

3. Haushaltsgerät zur Nahrungszubereitung nach einem der Ansprüche 1 oder 2, **dadurch gekennzeichnet, dass** das Steuerelement (16) an einem Körper (15) des Motorgehäuses (1) aufgehängt angebracht ist, der einen Sockel (10) zur Aufnahme des Arbeitsbehälters (2) bildet.

4. Haushaltsgerät zur Nahrungszubereitung nach einem der Ansprüche 1 bis 3, **dadurch gekennzeichnet, dass** das Steuerelement (16) seitliche Vorsprünge (41) aufweist, die in seitliche Öffnungen (60) des Motorgehäuses (1) eingreifen.

5. Haushaltsgerät zur Nahrungszubereitung nach Anspruch 4, **dadurch gekennzeichnet, dass** mindestens einer der seitlichen Vorsprünge (41) einen der Erfassungsnocken (40) trägt, die zum Zusammenwirken mit dem Übertragungselement (22) vorgesehen sind.

6. Haushaltsgerät zur Nahrungszubereitung nach einem der Ansprüche 4 oder 5, **dadurch gekennzeichnet, dass** die seitlichen Öffnungen (60) in Anformungen (11) eingebracht sind, die zur Blockierung der Drehung des Arbeitsbehälters (2) vorgesehen sind.

7. Haushaltsgerät zur Nahrungszubereitung nach Anspruch 6, **dadurch gekennzeichnet, dass** die Anformungen (11) konkav sind.

8. Haushaltsgerät zur Nahrungszubereitung nach einem der Ansprüche 1 bis 7, **dadurch gekennzeichnet, dass** die Anzahl der Winkelstellungen, in welchen der Arbeitsbehälter (2) auf den Motorgehäuse (1) aufgesetzt werden kann, zwischen 2 und 6 beträgt.
